**Europäisches Patentamt**

**European Patent Office**

**Office européen des brevets**

(19)

(11)  **EP 1 489 404 A1**

(12)  ## EUROPÄISCHE PATENTANMELDUNG

(43) Veröffentlichungstag:
    **22.12.2004 Patentblatt 2004/52**

(51) Int Cl.⁷: **G01N 21/05**, B01L 3/00,
    **G01N 15/14**

(21) Anmeldenummer: **04011167.6**

(22) Anmeldetag: **11.05.2004**

(84) Benannte Vertragsstaaten:
    **AT BE BG CH CY CZ DE DK EE ES FI FR GB GR
    HU IE IT LI LU MC NL PL PT RO SE SI SK TR**
    Benannte Erstreckungsstaaten:
    **AL HR LT LV MK**

(30) Priorität: **16.06.2003 DE 20309374 U**

(71) Anmelder: **GeSIM Gesellschaft für
    Silizium-Mikrosysteme mbH
    01454 Radeberg OT Grosserkmannsdorf (DE)**

(72) Erfinder:
    • **Howitz, Steffen Dr.
      01159 Dresden (DE)**
    • **Bürger, Mario
      01796 Pirna (DE)**

(74) Vertreter: **Lippert, Stachow, & Partner
    Patentanwälte
    Krenkelstrasse 3
    01309 Dresden (DE)**

(54)  **Verfahren zum Herstellen einer 3-D-Mikroskop-Durchflusszelle**

(57)    Die Erfindung betrifft ein Verfahren zum Herstellen einer 3-D-Mikroskop-Durchflusszelle, bestehend aus einem oberen und einem unteren Substrat, zwischen denen ein Strömungskanal angeordnet ist, eine den Strömungskanal durchdringende mit Außenkontakten verbundene Elektrodenstruktur und mit Durchkontaktierungen an den Enden des Strömungskanales zum Anschluss von Flüssigkeitszu- und abläufen. Durch die Erfindung soll ein Verfahren zum Herstellen von 3-D-Mikroskop-Mikrodurchflusszellen geschaffen werden, die für das reversible Assemblieren von Mikroskop-Durchflusszellen für dem µl-Volumenbereich geeignet sind. Erfindungsgemäß wird das dadurch erreicht, dass ein Basissubstrat (1) zunächst mit Zugangsbohrungen und einem Strömungskanal (3, 4) versehen wird, wobei der Strömungskanal (3, 4) aus einem Sandwich eines innen nichtelastischen und außen elastischen Material gefertigt wird, dass der Strömungskanal (3, 4) zum Zwecke eines fluidisch dichten Kanalverschlusses mit einem zweiten Deckglas (5) verpresst wird, um einen reversibel verschließbaren Strömungskanal (3, 4) zu schaffen.

Fig. 1b

EP 1 489 404 A1

**Beschreibung**

Die Erfindung betrifft ein Verfahren zum Herstellen einer 3-D-Mikroskop-Durchflusszelle, bestehend aus einem oberen und einem unteren Substrat, zwischen denen ein Strömungskanal angeordnet ist, eine den Strömungskanal durchdringende mit Außenkontakten verbundene Elektrodenstruktur und mit Durchkontaktierungen an den Enden des Strömungskanales zum Anschluss von Flüssigkeitszu- und abläufen.

Die Firma Warner Instruments bietet Mikroskopierkammern für den ml-Volumenbereich zur Mikro-Inkubation, für die Zell-Mikroskopie und für die Zell-Perfusion an. Sie hat sich als einer der ersten Hersteller für Mikroskop-Zubehör dem Thema reversibel montierbarer Mikrodurchflusszelle gestellt. Am Aufbau der Durchflusszelle für die konfokalen Zell-Mikroskopie (vgl. Warner Instruments Katalog 2002, S.172) wird das Prinzip der geschlossenen Mikroskopierkammer am besten sichtbar. Zwischen zwei Deckgläschen von ca. 150 μm Dicke, wird eine Silikonflachdichtung von 250..... 1000 μm Dicke gelegt. Eines der Deckgläschen hat Bohrungen für den Fluidzugang. Dieser 3-fach Verbund wird in einen zweiteiligen konzentrischen Träger eingelegt und durch das Ineinanderverschrauben beider Träger fluiddicht verpresst. Die obere Deckplatte des konzentrischen Trägers, der auf der Mikroskoparbeitsplatte Platz findet, beinhaltet die Fluidzuläufe.

Dieses Verfahren erlaubt den Gebrauch von zumindest einem Einweg-Deckgläschen und eines zweiten, speziell auf das Design des Durchflusskanales abgestimmten, gebohrten Deckgläschens oder eines Objektträgers. Die Kanalgeometrie ist auf das technisch Machbare bei der Strukturierung der Silikon-Flachdichtung beschränkt. D.h. die Kanäle sind nur millimetergenau und nicht dünner als 250μm herstellbar. Sie können nur grobe Konturen und keine inneren Kanalbarrieren wie Strömungsleitplanken oder Flowsplitter aufweisen und lassen sich nicht mikrometergenau auf Strukturen eines oder beider Deckgläser justieren, womit eine Vielzahl von Anwendungen mit elektrisch funktionalisierten Oberflächen schlicht nicht ausgeführt werden können.

Die Silikonflachdichtung ist relativ teuer, verkompliziert die Kammermontage, kann beim Einbau leicht dejustiert werden und lässt sich schlecht reinigen. Durch die Restriktionen in der Geometrie können nur relativ großvolumige Kanäle realisiert werden, Warner Instruments bietet das System daher für den ml-Volumenbereich an.

Die Firma ibidi GmbH offeriert eine neue Generation von μ-Slides, die als Mikroskopieträger aus Kunststoff für gängige auch hochauflösende Mikroskopiemethoden, wie z.B. DIC, Phasenkontrast, Fluoreszenz und Durchlicht geeignet sind. Diese Slide basierte Technik ist auf den Einsatz als Einwegprodukt am Mikroskop ausgerichtet, die ohne Verbindung zu Komponenten der automatisierten externen Fluidik arbeiten sollen.

Ein den Stand der Technik beschreibendes Produkt ist das sogenannte μ-Slide I welches als ein Flusskammersystem für Zellkultur und *in vitro* Zellmikroskopie angeboten wird. Dieses System ist ein irreversibel verbundenes Kanalsystem, bestehend aus den zwei Kunstoffebenen - der geprägten Basis und einem perforierten Deckel. Fluidisch besteht das μ-Slide I aus dem 100 μl Kanal, der auf beiden Seiten in einem 2ml-Fluidreservoir endet. Die 2 ml-Reservoirs bilden praktisch die Zellkulturschale, direkt verbunden mit dem einfachen Durchflusssystem zur mikroskopischen Betrachtung entsprechender Objekte am Inversmikroskop. Die Objekte werden in den Kanal eingeschwemmt, Strömungsparameter und Fluidzusammensetzung lassen sich, wie bei Anschluss externer Pumpen und Ventile möglich, nicht beeinflussen.

Ein zweites den Stand bestimmendes Produkt ist der μ-Slide V der ibidi GmbH. Aufgebaut nach dem Prinzip von μ-Slide I ist auch dieser ein Flusskammersystem für die gleichzeitige Protein-Analyse in 5 parallel durch das Mikroskopbildfeld verlaufende und je 17 μl fassende Kanäle. Die fluidischen Anschlüsse an die 5 Kanäle bilden auch hier je ein Einlauf- und Auslaufreservoirs, auch hier gibt es keine Möglichkeit Strömungsparameter durch externe Fluidik zu beeinflussen.

Ein drittes den Stand bestimmendes Produkt ist der Microarray μ-Slide der ibidi GmbH. Es handelt sich um ein vor der Anwendung noch offenes zweiteiliges Flusskammersystem für die Arbeit am Mikroskop, bestehend aus zwei Kunststoffteilen, der geprägten Basis und dem einmalig selbstklebenden, ungeprägten Deckel.

Ziel ist die schnelle Micro-Array Analyse durch insitu Hybridisierung im Durchflussmodus. Dazu wird das Mikro-Array mittels Spottingtechnik im Kammerbereich der anfangs offenen Basis erzeugt, anschließend wird der Deckel irreversibel aufgeklebt und die Durchflusshybridisierung kann erfolgen.

Nach der Hybridisierung des Arrays erfolgt die Auswertung am Mikroskop und dann wird das Slide verworfen. Der fluidische Kreis ist durch eine Einlassöffnung für konventionelle Einweg-Plastpipettenspitzen, die 10...400μl Reaktionskammer und ein Auffangreservoir am Auslass der Reaktionskammer gekennzeichnet.

Ihrem Einsatzgrundsatz als Einweg-Diagnostiksystem entsprechend, sind ibidi-Mikroskopierzellen low-cost Einwegartikel und als solche für einen methodisch sehr eingeschränkten Anwendungskreis geeignet. Durchflussanalysen, Testverfahren oder Handhabungstechniken die eines kontinuierlichen Durchflussbetriebes bedürfen, können in den ibidi-Systemen nicht realisiert werden.

Von einigen Firmen werden seit kurzer Zeit Durchflusszellen für die Mikroskopie im μl-Volumenbereich angeboten, diese Systeme sind Glas, Keramik, Kunststoff oder Silizium basiert und gestatten die Einbeziehung des stark gewachsenen Gebietes der Mikrosystemtechnik, der Bio- und Nanotechnologien.

Ippei Inoue entwickelt ein Zellkultursystem auf dem Chip - das gläserne Array-Slide als Mikrodurchflusszelle für die Arbeit unter dem optischen Mikroskop [Ippei, Inoue, et al.; On chip culture system for observation of isolated individual cells; Lab on a Chip, 2001 1, 50-55].

Ausgangspunkt ist ein Glasslide, in welches arrayförmig angeordnete Mikrokavitäten geätzt werden. Durch Aufbringung einer Abdeckplatte auf das Array-Slide entsteht die Mikrodurchflusszelle. Wird diese Mikrodurchflusszelle auf die Arbeitsplatte eines Inversmikroskops platziert und mit einer externen Fluidversorgung verbunden, kann der fluidische Prozess und die mikroskopische Beobachtung simultan realisiert werden.

Hier soll nur auf das fluidtechnische System, das Array-Slide, näher eingegangen werden. Die Mikrokavitäten werden mittels isotropen Ätzens des Glases hergestellt. Die eingebrachten Mikrokavitäten messen im Durchmesser 20...70µm und in der Tiefe 5...30µm. Die Oberfläche des Glases wurde nach dem Ätzen durch Anbindung von Aminogruppen und Biotin nanoskalig funktionalisiert. Verwendet wurden dazu kommerziell verfügbare Chemikalien, die mittels Tauch-, Temper- und Waschtechniken auf das Glas aufgebracht wurden. Die Mikrokavitäten werden im Anschluss mit Zellen befüllt und mit einer halbdurchlässigen, mit Streptavidin funktionalisierten, Zellulosemembran verschlossen. Die Biotin-Streptavidin Bindung liefert in diesem System so den zuverlässigen Verschlussmechanismus zwischen den mit Zellen gefüllten Mikrokavitäten und der Membran. Dieser Verschluss erfolgt also ohne zu kleben und ohne elastische Dichtung.

Dies ist ein Beispiel für die Verwendung der starken Botin-Streptavidin Bindung für die Lösung eines Assemblierungsproblems in der Biotechnologie. Ist dieses Zell-basierte Array-Slide auf dem Objektträger hergestellt, legt man einen mikroskaligen 1-Kanal-Glasdeckel auf und kann Nährlösung von außen zuführen. Der Austausch des Nährmediums in jeder, mit einer Zellulose-Membran abgedeckten Mikrokavität erfolgt durch Diffusion in der Abdeckmembran. Nachteil dieser biotechnologischen Assemblierungsmethode ist, dass ein biochemisch realisierter Biotin/Avidin Kontakt irreversibel verbunden ist.

Ein weiteres Beispiel der Realisierung von Mikroskopierzellen ist ein von der Firma GeSiM im Patent PCT/ DE 01/03324 vorgeschlagenes Verfahren. Hier werden fotolithografische Strukturierungstechniken und SMD-Montagetechnologie so verknüpft, dass Basisglas und Deckglas der Mikroskopierzelle mikrometergenau zueinander positioniert und irreversibel miteinander verklebt werden können. Diese Technologie ist für Mehrwegprodukte sehr interessant, für Einwegprodukte aber deutlich zu aufwendig.

Der Erfindung liegt die Aufgabe zugrunde, ein Verfahren zum Herstellen von 3-D-Mikroskop-Mikrodurchflusszellen zu schaffen, die für das reversible Assemblieren von Mikroskop-Durchflusszellen für dem µl-Volumenbereich geeignet ist, die für die Nutzung der modernen Mikrotechnologien offen sind und eine kostengünstige Nutzung von Einwegartikeln der Mikroskopie erlauben.

Die der Erfindung zugrunde liegende Aufgabe wird durch die kennzeichnenden Merkmale des Anspruchs 1 gelöst.

Weitere Ausgestaltungen gehen aus den zugehörigen Unteransprüchen hervor.

Durch den kombinierten Einsatz der Mikrosystemtechnologie, wie dem Glasbohren (z.B.: US-Bohren oder Mikrosandstrahlen), wie der fotolithografischen Polymerstrukturierung (z.B.: Fotolacke oder Fotoepoxidharze) und wie dem Siebdrucken von elastischen Dichtungsschichten (z.B.: Silikonkautschuk, PDMS), wird ein Objektträger für die Mikroskopie so funktionalisiert, dass eine reversibel montierbare Mikrodurchflusszelle für den µl-Volumenbereich entstehen kann. Gemäß der Erfindung sind so aufgebaute Mikroskop-Durchflusszellen nach dem Gebrauch einfach zerlegbar, kann das benutzte Deckglas verworfen und der funktionalisierte Objektträger nach der Reinigung einer erneuten Nutzung zugeführt werden.

Im Gebrauch bilden der Objektträger und das Deckglas (z.B.: 150 µm Einweg-Deckglas) eine Mikrodurchflusszelle dadurch, dass beide Teile in einem mechanischen Rahmen, einem sogenannten Support, eingelegt und darin exakt zueinander justiert werden. Der Support wiederum wird so in den optischen Strahlengang des Mikroskops justiert, dass die Mikroskopierzelle exakt in die Beobachtungsebene des Mikroskops gebracht ist. Der Support ist ferner so konstruiert, dass beide Fügepartner, der Objektträger und das Deckglas miteinander fluidisch dicht verpresst werden.

Die Dichtung, für die fluidische Abdichtung beider Substrate unabdingbar notwendig, wird auf dem Objektträger und vor der Montage am Support so aufgebracht, dass diese wiederholt eingesetzt werden kann und zwischen den Wechselprozessen der Deckgläser leicht gereinigt werden kann.

Durch zweckmäßige Konstruktion des Supports, der auf die Größe beider Glassubstrate exakt angepasst sein muss ist, erfolgt diese Verbindung ohne mechanischen Justieraufwand, d.h. quasi blind und nur über die Außenabmessungen der Fügepartner justiert. Die totvolumenarme fluidische Verbindung der Mikroskop-Durchflusszelle mit externen fluidischen Komponenten wie Pumpen, Ventilen, Mischern und Sensoren wird durch direkt an den Objektträger angepresste O-Ringe gewährleistet.

Das Schwergewicht der Erfindung liegt auf der technischen Realisierung des Systems aus Mikrokanal und Dichtungssystem in Gestaltunion, d.h. Dichtung und Mikrokanal entstehen als ein Mehrlagenverbund und durch Realisierung eines speziellen technologischen Fertigungsablaufes. Dieser Fertigungsablauf umfasst die Planartechnologien der Mikrosystemtechnik, z.B. die Fotolithografie und den Siebdruck.

Anwendungen für diese Vorrichtung sind sehr vielseitig, dies ergibt sich aus der Tatsache, dass das Einwegprodukt Deckglas, mit dem Mehrwegprodukt Objektträger direkt in Eingriff gebracht werden können. Voraussetzung aber ist, dass das Mehrwegprodukt spezifisch vorbehandelt wurde. Der Benutzer kann dadurch beliebig viele und auf unterschiedliche Weise vorbehandelte Einwegprodukte in einem beliebig anspruchsvollen mikrofluidischen Kanalsystem seriell testen.

Von den vielen sich in diesem Einweg-Mehrweg-System ergebenden Möglichkeiten seien hier einige Anwendungen genannt, Fluoreszensmikroskopie, Fluoreszenz-insitu-Hybridisierung (FISH), Konfokale Mikroskopie, Kombination aus Laserdesection und Probennachbehandlung bzw. Probeablage, DNA-Handling und DNA-Hybridisierung im Durchfluss, Kapillarelektrophorese und Dielektrophorese, Reaktionskinetik, Zell-Stress bei gleichzeitig Temperaturwechsel, bei Wechsel der Ionenkonzentration, Beweglichkeits-Assays als Form des Zellvitalitätstest unter spezifischen Fluidbedingungen und Mikroassemblierung von funktionalisierten Deckglasoberflächen in der Nanotechnologie.

Die Erfindung soll nachfolgend an einem Ausführungsbeispiel näher erläutert werden. In den zugehörigen Zeichnungen zeigen:

Fig. 1 a:    das Dichtungsprinzip an einer erfindungsgemäßen 3-D Mikroskop-Mikrodurchflusszelle, bestehend aus einem gläsernen Objektträger und einem Deckglas, vor dem Zusammenbau;

Fig. 1b:    das Dichtungsprinzip an einer erfindungsgemäßen 3-D Mikroskop-Mikrodurchflusszelle, bestehend aus einem gläsernen Objektträger und einem Deckglas, nach dem Zusammenbau;

Fig. 2a:    eine Prinzipdarstellung einer 3-D Mikroskop-Mikrodurchflusszelle als Einbausequenz;

Fig. 2b:    eine Prinzipdarstellung einer 3-D Mikroskop-Mikrodurchflusszelle im montierten Zustand;

Fig. 3a:    aktiv schaltende fluidische Anschlussfittings mit einem Hydrogel-Mikroventil mit einem Schlauchfitting;

Fig. 3b:    aktiv schaltende fluidische Anschlussfittings mit einem Hydrogel-Mikroventil mit einem manuellen Injektorfitting;

Fig. 4:    ein fluidisches Systemschema mit den Sequenzen der Befüllung und der Probeaspiration;

Fig. 5:    ein fluidisches Systemschema mit den Sequenzen Probeinjektion und Kanalspülung;

Fig. 6:    eine Mikroskopierzelle im 2-Teile Support, bestehend aus Manifold-Objektträger mit Elektroden, Deckglas und passiven bzw. aktiven Anschlussfittings;

Fig. 7:    eine Mikroskopierzelle, bestehend aus Manifold-Objektträger, Deckglas und passivem sowie aktivem Schlauchfitting;

Fig. 8:    ein Systembeispiel einer Mikroskopierzelle mit Manifold-Objektträger und aktiven Schlauchfittings;

Fig. 9:    eine reversibel montierte Mikroskopierzelle für den Betrieb mit Objektträger und Deckglas, die beidseitig Elektroden tragen;

Fig. 10a:    den Abformprozess zur Herstellung einer PDMS-Channel-Plate, Mit einem Abformwerkzeug vor der Befüllung mit PDMS;

Fig. 10b:    das Abformwerkzeug nach der Befüllung mit PDMS;

Fig. 10c:    eine fertig gestellte PDMS-Channel-Plate

Fig. 11:    eine Mikroskopierzelle mit der PDMS-Channel-Plate nach Fig. 10c; und

Fig. 12:    das Prinzip eines Faser-Kopplers an der PDMS-Channel-Plate.

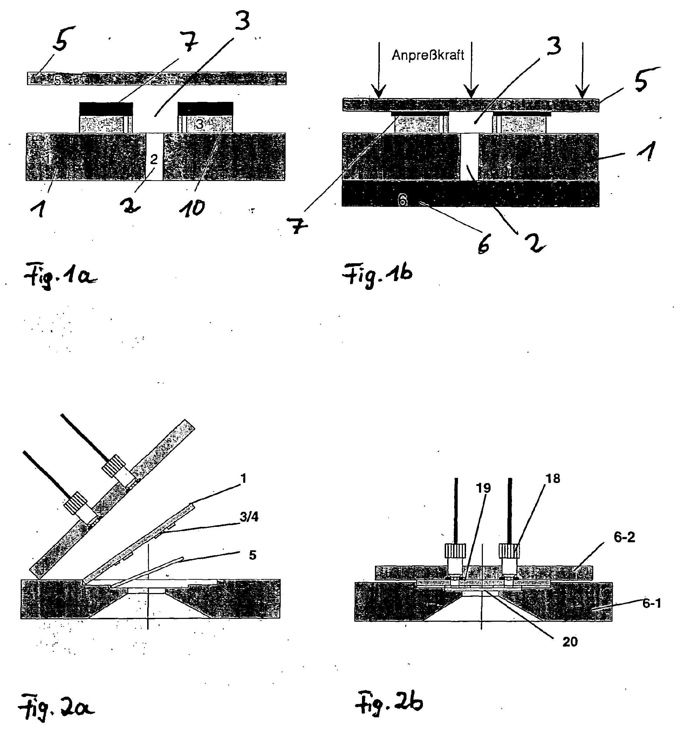

Das Grundelement der erfindungsgemäßen Vorrichtung, gezeigt in den Fig. 1a und 1b, besteht aus dem Objektträger 1 und dem Deckglas 5. Der Objektträger 1 besitzt Zugangsbohrungen 2 und das Kanalsystem 3, 4. Der Durchmesser der Zugangsbohrungen beträgt 200....1000 μm, die Dicke des gläsernen Objektträgers 0,5 bis 1,5 mm. Die Anordnung der Löcher kann durch die spezielle Applikation vorgegeben werden, sie kann aber auch in Form einer universellen Lochplatte so ausgeführt werden, dass sich mehrere unterschiedliche Applikationen mit einem Objektträger befriedigen lassen. Das auf der Innenseite des Objektträgers befindliche Kanal- und Dichtungssystem, ein Verbund aus einem harten Kernwerkstoff 3 und einem elastischen Dichtungsmaterial 4, wird mikrotechnologisch gefertigt. Das Design richtet sich nach der individuellen Kanalform der jeweiligen Applikation.

Die Kanalsysteme können mit unterschiedlichen Abmessungen und Materialien für Kern und Dichtung gefertigt werden. Die Breite und Höhe des harten Kernwerkstoffes für den Kanals 3 kann zwischen 5μm und einigen 100μm betragen. Der harte Kernwerkstoff des Kanalsystems kann durch Strukturierung eines Fotopolymers, durch Ätzen des Objektträgerglases oder durch Ätzen von Silizium erfolgen.

Zum Zwecke der Abdichtung wird auf die Oberfläche des harten Kernwerkstoffes ein elastisches und gut haftendes Polymer aufgebracht. Vorzugsweise wird hierfür Silikonkautschuk mittels Siebdruck oder Stempeldruck aufgetragen 4. Die Höhe des aus 3 und 4 zusammengesetzten Kanalsystems richtet sich maßgeblich nach der Dicke des harten Kernwerkstoffes, typische Werte sind 5 bis einige 100μm. Die Breite der Kanäle kann zwischen einigen μm bis zu einigen mm ausgewählt werden.

Das so auf dem Objektträger 1 gebildete Kanalsystem 3, 4 ist bis zu diesem Zeitpunkt ein oben noch offenes Kanalsystem, welches erst durch Verbindung mit einem zweiten Substrat, vorzugsweise einem nur 150 ...200μm dickem gläsernen Deckglas 5, verschlossen wird. Erst im verschlossenen Zustand entsteht der fluidisch nutzbare Mikrokanal. Die Verbindung Objektträger und Deckglas erfolgt im sogenannten Support, der aus dem unteren Support 6-1 und dem oberen Support 6-2 besteht. Unterer und oberer Support werden durch Federkraft und Führungsstifte genau so stark zusammengedrückt, dass der Objektträger und das Deckglas zwischen diesen Supportplatten liegend miteinander fluidisch dichtend verbunden werden. Zur Herstellung des fluidisch dichten Kanales bedarf es einer minimalen und relativ grob ausführbaren Justierarbeit, diese Verbindungsbildung, dargestellt in Fig. 2, kann beliebig oft wiederholt werden.

Da man zum Aufbau der Mikroskopierzelle die preiswerten und kommerziell verfügbaren Deckgläser verwenden kann, sind der Anzahl realisierbarer Durchflusszellen kaum Grenzen gesetzt. Die Deckgläser können vor dem Einbau methodenabhängig chemisch, biologisch oder physikalisch funktionalisiert werden. Ist die Funktionalisierung abgeschlossen, kann man das Deckglas mit dem Objektträger innerhalb von Sekunden und ohne aufwendige Justierarbeit zu einem geschlossenen Kanalsystem verbinden.

Beschreibung besonderer Ausführungsbeispiele:

In Abhängigkeit der Komplexität des Mikrokanalsystems, der mikrofluidischen, optischen, chemischen, physikalischen und sensorischen Anforderungen, fällt die Konstruktion der Mikroskopierzelle und der Peripherie unterschiedlich aus. In einigen Ausführungsbeispielen soll dies beschrieben werden.

a) Einlagen - Objektträger aus Glas mit niedrig verzweigten Kanalsystemen

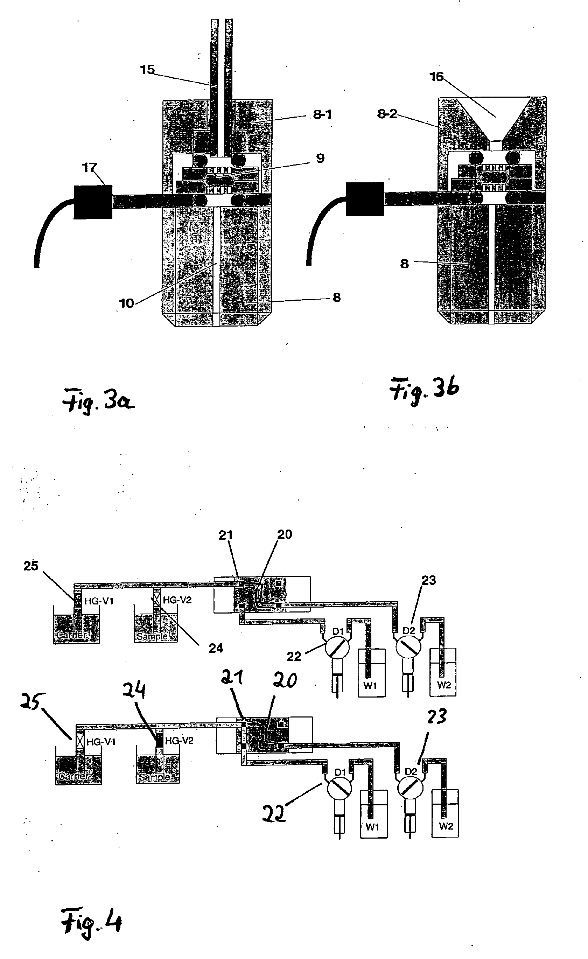

Die Fig. 2 und 4 zeigen Mikroskopierzellen, die aus je einem gläsernen Objektträger 1 mit Standardabmessungen 75 mm x 25 mm x 1 mm und einem Deckglas 5 in den Abmessungen 22 mm x 22 mm x 0,15 mm zusammengesetzt sind. Der Objektträger besitzt 4 Durchgangsbohrungen, d.h. die für Kanalsysteme verfügbare Anzahl von Fluidanschlüssen ist auf maximal 4 begrenzt. Die 4 Fluidanschlüsse 18 haben jeweils einen Platzbedarf von 0 7,5mm und beeinträchtigen bei seitlicher Anordnung am Deckglas, die optische Transparenz im Bereich des Strömungskanals 20 nicht störend. Allerdings kann man nicht mehr als diese sechs Anschlüsse unter Beibehaltung des Aufbauprinzips und bei Gewährleistung eines ausreichend großen optischen Inspektionsbereichs anbringen.

Im Ausführungsbeispiel werden drei Fluidanschlüsse benutzt, zwei für den T-förmigen Eingangskanal und einer für den Auslassanschluss. Ein Fluidanschluss ist im Ausführungsbeispiel redundant vorliegend.

Wie in der allgemeinen Beschreibung dargestellt, befindet sich auf dem Glasobjektträger das Kanalsystem. Es besteht aus dem harten, 50μm hohen Kernwerkstoff 3 aus Fotopolymer und der 20μm dicken Silikonkautschukdichtung 4, der Verbund wird im zweiteiligen Support 6-1 und 6-2 zu einem fluidisch dichten Strömungskanal verbunden. Das Kanalsystem besitzt im Eingangsbereich des Strömungskanals 20 einen T-förmige Kanalkreuzung 21. Dieser T-Kanal ermöglicht eine totvolumenarme Probeinjektion in den Beobachtungskanal 20.

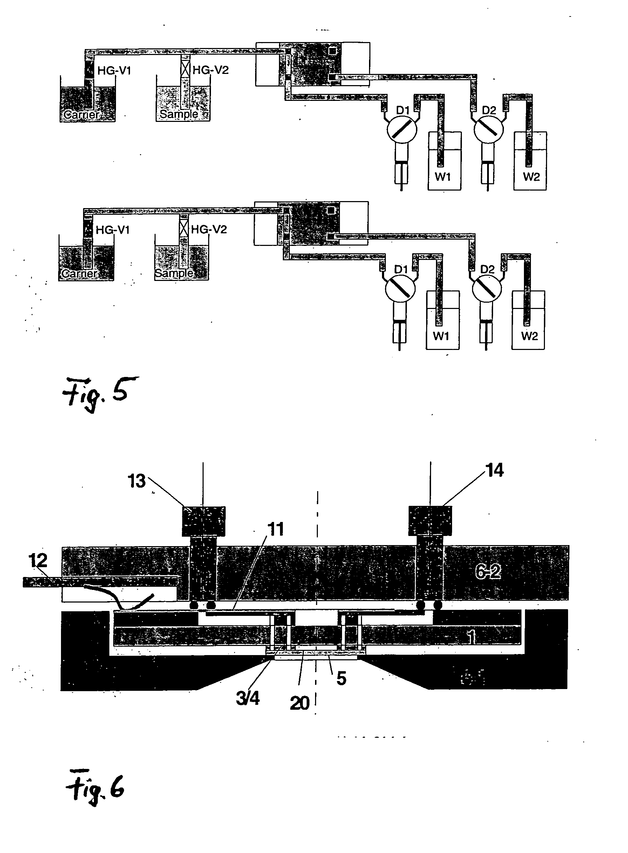

Um die Funktion dieses T-Stücks zu verstehen, betrachte man die fluidischen Sequenzen in den Fig. 4 und 5, darin sind die fluidischen Prozesse beim Befüllen, bei der Probenahme, bei der Probeinjektion und beim Spülen im Kanalsystem der Mikroskopierzelle deutlich gemacht. In der Systemperipherie gibt es zwei Spritzenpumpen 22, 23 und zwei Ventile 24, 25. Wird die Spritzenpumpe 22 bei geöffnetem Probe-Ventil 25 und bei geschlossenem Carrier-Ventil 24 aufgezogen und bleibt dabei das Eingangsventil der Spritzenpumpe 23 geschlossen, kann man bei im Kanal 20 fixiertem Fluid, Probe an den T-förmigen Kanaleinlass 21 saugen. Vorteilhaft dabei ist, dass während dieser fluidischen Aktivität keine Beeinflussung der im Bildfeld 20 befindlichen Flüssigkeit auftritt, wenn man Diffusionsphänomene an dieser Stelle nicht betrachtet. Gleichzeitig aber kommt es am Eingang des Beobachtungskanales 20 zum kompletten Lösungswechsel am T-förmigen Kreuzungspunkt 21. Im Beispiel wird an der T-förmigen Eintrittsstelle vom Carrier-Fluid auf das Probe-Fluid gewechselt. Wird nun das Carrier-Ventil 24 wieder geöffnet, gleichzeitig das Probe-Ventil 25 verschlossen, die Spritzenpumpe 22 ausgeschaltet und gegenüber dem T-Kanal 21 verschlossen, kann man mit der Spritzenpumpe 23 eine exakte und totvolumenarme Probeinjektion in den Strömungskanal 20 realisieren.

b) Mehrlagen-Objektträger aus Glas-Silizium für Anwendungen mit hoch verzweigten Kanalsystemen

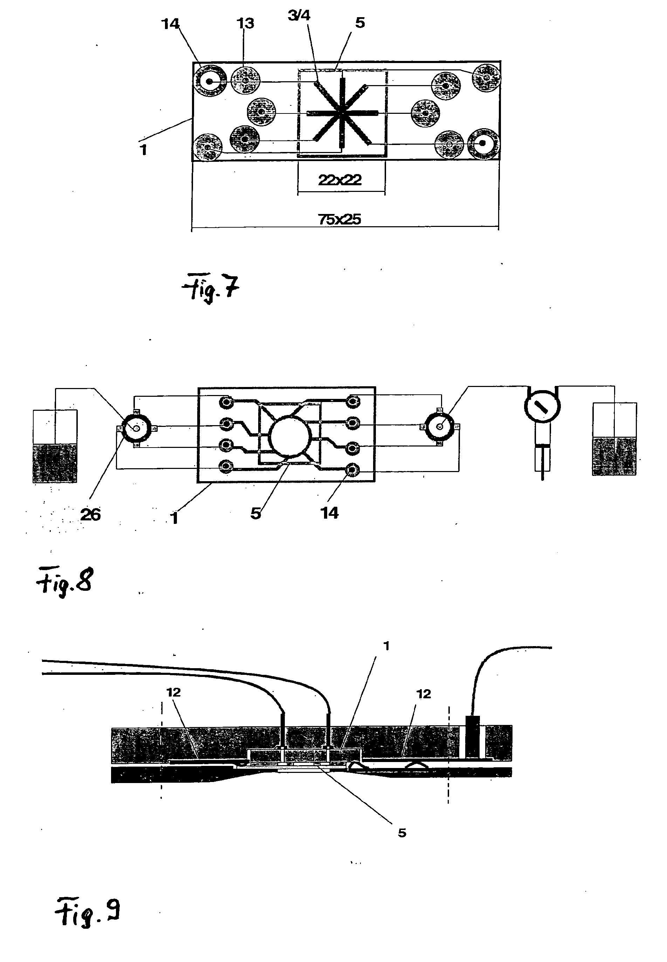

In Fig. 7 ist ein Mehrlagen-Objektträger mit Deckglas gezeigt, der auf einer Deckglasfläche von 22x22 mm$^2$ acht Fluidanschlüsse aufweist. Mit Bezug auf das unter a) genannte Konstruktionsprinzip, könnte diese Aufgabe aus Platzgründen nicht gelöst werden, da die Schlauchanschlüsse aus Platzgründen nicht am Objektträger untergebracht werden können. Ein Lösungsweg wäre die Vergrößerung des Deckglases soweit zu betreiben, dass die Fluidanschlüsse im Randbereich des Deckglases gerade so Platz finden können.

Der in Fig. 6 beschriebene erfindungsgemäße Weg geht nicht von der Vergrößerung des Deckglases aus, sondern hier wird ein Objektträger 1 beschrieben, der zugleich Manifold, Lochplatte und Kanalträger ist. Indem die im Manifold des Objektträgers befindlichen Kanäle zwischen den im Außenbereich des Objektträgers angeordneten Fluidanschlüssen und den unter dem Deckglas konzentrierten Fluidanschlüssen vermitteln, lassen sich sehr viele Fluidanschlüsse am Deckglas konzentrieren und zugleich platzraubende Schlauchanschlüsse im Außenbereich des Objektträgers ohne Beeinträchtigung der optischen Funktion unterbringen. Erfindungsgemäß wird der als Manifold ausgebildete Objektträger als Mehrlagensystem aufgebaut.

In Fig. 6 ist ein Silizium-Glas Verbund 1 mit Bohrungen im Silizium und im Glas, Abmessungen von 75 mm x 25 mm x 1, 4 mm und einer Funktionsmetallisierung auf der Siliziumrückseite 11 dargestellt. Auf der Vorderseite des Silizium-Glas Verbundes 1 befindet sich wieder der Strömungskanal 3, 4 und 20, dieser weist die in Fig. 7 dargestellte Sternform auf, wobei auch hier die Abdichtung durch Verpressen mit dem Deckglas 5 im Support 6-1 und 6-2 erfolgt. Die fluidische Ansteuerung erfolgt mit wie unter a) beschrieben, mit externen fluidischen Baugruppen.

c) Mikroskopierzellen mit aktiven Schlauchanschlüssen

In Fig. 7 ist eine Mikroskopierzelle gezeigt, die neben passiven Schlauchanschlüssen 13 auch über aktive Schlauchanschlüsse 14 verfügt. Der aktive Schlauchanschluss 14 trägt ein Mikroventil, das direkt in den Strömungskanal des Fittings integriert ist. Die Ausführung des aktiven Fittings kann wie in Fig. 3a dargestellt als Schlauchfitting oder Fig. 3b als Injektorfitting realisiert sein.

Das in Fig. 3a gezeigte Schlauchfitting besteht aus einem zweiteiligen Kunststoffgehäuse, dem Basiskörper 8 und dem Deckel 8-1. Diese Gehäuseteile werden nach dem Einlegen des Mikroventil 9 mit Leiterplatte 17 verschraubt. Der von außen einlaufende Schlauch, wird beim Verschrauben der Gehäuseteile fluidisch dicht mit dem Siliziumkörper des Mikroventils 9 verpresst. Das Mikroventil 9 im Ausführungsbeispiel als Öffner-Ventil mit Hydrogel-Aktuator ausgeführt, kann über die elektrische Verbindung 17 mit einer Schaltleistung von 200 mW geöffnet werden. Im elektrisch spannungslosen Zustand bleibt das Ventil geschlossen und kann mit einem Druck von maximal 6 bar leckfrei belastet werden.

Das in Fig. 3b gezeigte Injektorfitting besteht aus einem zweiteiligen Kunstoffgehäuse, dem Basiskörper 8 und dem Deckel 8-2. Der Deckel 8-2 besitzt eine Trichteröffnung 16, in welche die Probe manuell oder mittels Dosierautomat zupipettiert werden kann. Diese Gehäuseteile werden nach dem Einlegen des Mikroventils 9 mit der Leiterplatte 17 verschraubt. Wird das Öffner-Ventil über den Hydrogel-Aktuator elektrisch geöffnet, kann ein definiertes Probevolumen in die Mikroskopierzelle eingesaugt werden. Vorteilhaft an dieser Lösung ist, dass es beim elektrischen Abschalten des Mikroventils im Injektorfitting keine Leckage in Richtung Mikroskopierzelle geben kann.

In Fig. 8 ist ein Systemlayout der Mikroskopierzelle mit aktiven Schlauchfittings gezeigt, der die Realisierung einer komplexen fluidischen Logik ohne den Gebrauch externer Makroventile erlaubt.

Weiterhin kann die reversibel montierbare Mikroskop-Durchflusszelle sowohl auf dem Objektträger (gebohrt, Kanal tragend, ca. 1mm dick) als auch auf dem Deckglas (Dicke 150 µm) mit Elektroden versehen sein, die durch Federkontaktleisten abgegriffen und einer externen Elektronik zugeführt werden (Fig. 9).

c) PDMS-Channel-Plate

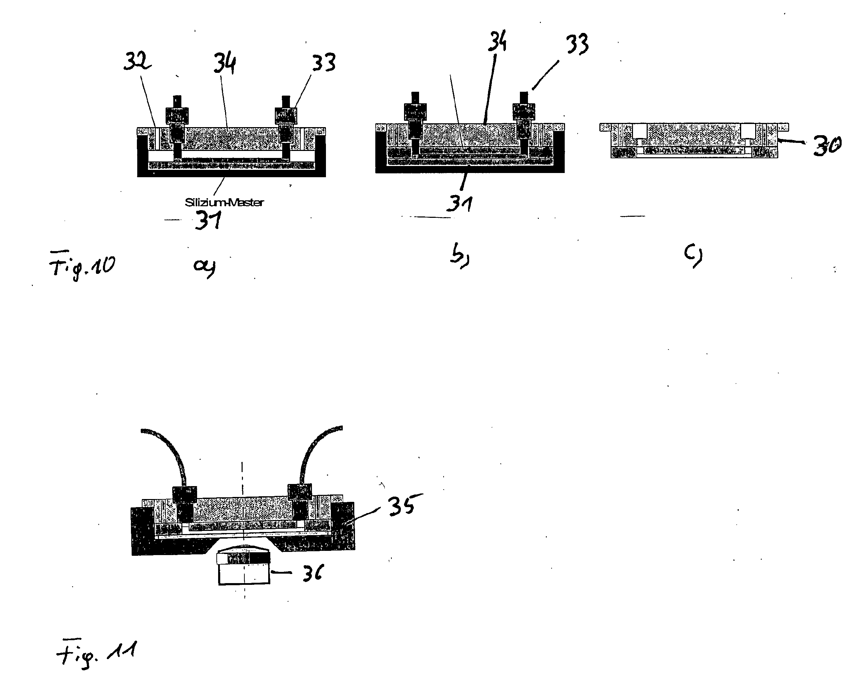

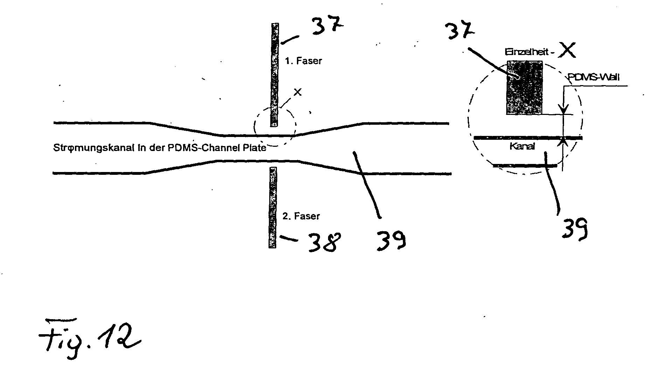

In den Fig. 10 und 11 ist die Herstellung einer PDMS-Channel-Plate 30 dargestellt. Fig. 10a zeigt dabei den Abformprozess zur Herstellung der PDMS-Channel-Plate 30 mit einem Abformwerkzeug (Silizium-Negativ-Struktur 31) vor der Befüllung mit PDMS und Fig. 10b das Abformwerkzeug nach der Befüllung mit PDMS durch einen PDMS-Zulauf 32 sowie Kanalstoppern 33 in einer PMMA-Plate 34. In Fig. 10c ist schließlich eine fertig gestellte PDMS-Channel-Plate 10 dargestellt.

Fig. 11 zeigt eine einsatzbereite Mikroskopierzelle mit der PDMS-Channel-Plate.

Kanalsysteme mit der PDMS-Channel-Plate 30 genügen höchsten Genauigkeitsansprüchen, da die Abformstrukturen durch Mikrofertigungstechnologien in Silizium hergestellt werden und die Abformung vom Silizium-Master auf den PDMS-Silikonkautschuk quasi fehlerfrei erfolgt. Um gute Entformungseigenschaften zu erhalten, wird der Silizium-Master plasmachemisch mit einer Teflonbeschichtung versehen.

Damit können der Kanal, die Dichtung zum Deckglas und der Fluidanschluss in einem Arbeitsgang mit der Genauigkeit einer fotolithografischen Technologie hergestellt werden.

Die Mikroskopierzelle nach Fig. 11 besteht aus einem mechanischen Support 35 zur Aufnahme der PDMS-Channel-Plate 30 zur Adaption an ein Mikroskop (Mikroskopobjektiv 36) oder an eine andere Vorrichtung, sowie den externen fluidischen Komponenten - Pumpen, Ventile, Sensoren, Mischer etc.

e) PDMS-Channel-Plate mit Faser-Koppler (Fiber-Connector)

Fig. 12 zeigt schließlich das Prinzip eines Faser-Kopplers an der PDMS-Channel-Plate. Um einen Faser-Koppler aus einer Faser 37, 38 an der PDMS-Plate 30 anbringen zu können, werden beim Abformprozess vom Silizium-Master (Silizium-Negativ-Struktur 31) sowohl der Durchflusskanal 39, als auch eine Grube zur Führung einer oder mehrerer optischer Fasern 37, 38 erzeugt.

Die Fixierung der optischen Fasern 37, 38 erfolgt hier im elstischen Silikonkautschuk, wobei erfindungsgemäß zwischen dem fluidführenden Kanal 39 und der optischen Faser 37, 38 eine dünne Resthaut von wenigen 10 μm verbleibt, ist die fluidisch dichte Ankopplung der Fasern 37, 37 problemlos möglich.

Durch die Wahl einer genügend langen Führungslänge der optischen Faser im PDMS ist eine μm-genaue Lagerung der Fasern 37, 38 in Bezug auf den Durchflusskanal 39 möglich. Das elastische Bulkmaterial, d.h. das PDMS, kann die Faser 37, 38 mechanisch nicht schädigen. Durch die relativ hohe Härte des PDMS wird eine reversible Lagerung der optischen Fasern 37, 38 und bei Verwendung eines optischen Koppelöls eine perfekte Indexankopplung erreicht.

**Bezugszeichenliste**

| 1 | Objektträger |
|---|---|
| 2 | Zugangsbohrung |
| 3 | Kanalsystem |
| 4 | Kanalsystem |
| 5 | Deckglas |
| 6-1 | Support |
| 6-2 | Support |
| 7 | Silikondichtung |
| 8 | Basiskörper |
| 8.1 | Deckel |
| 8.2 | Deckel |
| 9 | Mikroventil |
| 10 | Kanalpolymer |
| 11 | Siliziumrückseite |
| 13 | Schlauchanschluss |
| 14 | Schlauchanschluss |
| 16 | Trichteröffnung |
| 17 | Leiterplatte / elektrische Verbindung |
| 18 | Fluidanschluss |
| 20 | Strömungskanal / Beobachtungskanal |
| 21 | T-förmige Kanalkreuzung |
| 22 | Spritzenpumpe |
| 23 | Spritzenpumpe |
| 24 | Carrier-Ventil |

25 Probe-Ventil

30 PDMS-Channel-Plate
31 Silizium-Negativ-Struktur
32 PDMS-Zulauf
33 Kanalstopper
34 PMMA-Platte
35 mechanischer Support
36 Mikroskopobjektiv
37 Optische Faser
38 Optische Faser
39 Durchflusskanal

**Patentansprüche**

1. Verfahren zum Herstellen einer 3-D-Mikroskop-Durchflusszelle, bestehend aus einem oberen und einem unteren Substrat, zwischen denen ein Strömungskanal angeordnet ist, eine den Strömungskanal durchdringende mit Außenkontakten verbundene Elektrodenstruktur und mit Durchkontaktierungen an den Enden des Strömungskanales zum Anschluss von Flüssigkeitszu- und abläufen, **dadurch gekennzeichnet, dass** ein Basissubstrat (1) zunächst mit Zugangsbohrungen und einem Strömungskanal (3, 4) versehen wird, wobei der Strömungskanal (3, 4) aus einem Sandwich eines innen nichtelastischen und außen elastischen Material gefertigt wird, dass der Strömungskanal (3, 4) zum Zwecke eines fluidisch dichten Kanalverschlusses mit einem zweiten Deckglas (5) verpresst wird, um einen reversibel verschließbaren Strömungskanal (3, 4) zu schaffen.

2. Verfahren nach Anspruch 1, **dadurch gekennzeichnet, dass** der Kern aus dem nichtelastischen Material aus einem Polymer besteht, das zunächst fotolithografisch strukturiert und anschließend gehärtet wird.

3. Verfahren nach Anspruch 1 und 2, **dadurch gekennzeichnet, dass** sich die Höhe des Strömungskanales (3, 4) aus der Polymerhöhe nach der Formel

$$(1{,}30...1{,}45) * \text{Polymerhöhe} = \text{resultierende Kanalhöhe}$$

bestimmt.

4. Verfahren nach Anspruch 1 bis 3, **dadurch gekennzeichnet, dass** die auf dem unelastischen Kern des Strömungskanales (3, 4) deckungsgleich aufliegende elastische Deckschicht aus einem Elastomer, wie einem Ein- oder Mehrkomponenten-Silikonkautschuk gefertigt wird, der erst beim Verpressen mit dem Deckglas (5) Dichtwirkung erzielt.

5. Verfahren nach den Ansprüchen 1 bis 4, **dadurch gekennzeichnet, dass** die elastische Deckschicht durch Siebdruck auf das Basissubstrat (1) mit Fluidzugangsbohrungen und festem Kanal aufgerakelt wird, so dass eine Printed-Channel-Plate entsteht.

6. Verfahren nach den Ansprüchen 1 bis 5, **dadurch gekennzeichnet, dass** der zweischichtige Strömungskanal auf der Oberseite eines mehrschichtig ausgeführten Objektträgers aufgebracht wird und ebenfalls durch Gegenpressen eines Deckglases (5) abgedichtet wird.

7. Verfahren nach Anspruch 6, **dadurch gekennzeichnet, dass** Fluidzu- und ausläufe im Objektträger dreidimensional verzweigt angeordnet werden.

8. Verfahren nach einem der Ansprüche 1 bis 7, d a d u r c h  g e k e n n z e i c h n e t, dass im Basissubstrat (1) Mikroventile direkt integriert oder über Anschlusskomponenten (14) auf die Printed-Channel-Plate aufgeschraubt werden.

9. Verfahren nach Anspruch 1, **dadurch gekennzeichnet, dass** an eine Platte ein dreidimensionales Kanalsystem in PDMS (Polydimethylsiloxane) angegossen wird und das so hergestellte PDMS-Kanalsystem nachfolgend mit einem Deckglas reversibel verpresst wird.

10. Verfahren nach Anspruch 10, **dadurch gekennzeichnet, dass** die Ausformung des PDMS-Kanalsystems auf der Platte mit Hilfe von in Silizium ausgebildeten Abformstrukturen vorgenommen wird.

Fig. 1a

Fig. 1b

Fig. 2a

Fig. 2b

Fig. 3a

Fig. 3b

Fig. 4

Fig. 5

Fig. 6

Fig. 7

Fig. 8

Fig. 9

Fig. 10

Fig. 11

37

1. Faser

X

Strømungskanal in der PDMS-Channel Plate

2. Faser

~ 38    39

37

Einzelheit - X

PDMS-Wall

Kanal

39

Fig. 12

| | Europäisches Patentamt | EUROPÄISCHER RECHERCHENBERICHT | Nummer der Anmeldung EP 04 01 1167 |

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X,D | WO 02/21115 A (FUHR GUENTHER ;HOWITZ STEFFEN (DE); GESIM GES FUER SILIZIUM MIKROS) 14. März 2002 (2002-03-14) | 1-5 | G01N21/05 B01L3/00 G01N15/14 |
| Y | * Zusammenfassung * * Seite 4, Zeile 5 - Seite 7, Zeile 30 * * Seite 9, Zeile 9 - Zeile 18 * * Seite 10, Zeile 15 - Seite 13, Zeile 31 * * Seite 15, Zeile 8 - Zeile 15 * * Abbildungen 1-5 * --- | 6-10 | |
| Y | WO 00/55618 A (BUERGER MARIO ;HOWITZ STEFFEN (DE); REBENKLAU LARS (DE); GESIM GES) 21. September 2000 (2000-09-21) * Zusammenfassung * * Seite 3, Zeile 11 - Zeile 15 * * Seite 4, Zeile 15 - Seite 7, Zeile 24 * * Seite 8, Zeile 9 - Zeile 24 * * Seite 9, Zeile 21 - Zeile 24 * * Seite 10, Zeile 28 - Seite 11, Zeile 2 * --- | 6-10 | |
| A,D | MUELLER T ET AL: "3-D MICROELECTRODE SYSTEM FOR HANDLING AND CAGING SINGLE CELLS AND PARTICLES" BIOSENSORS & BIOELECTRONICS, ELSEVIER SCIENCE PUBLISHERS, BARKING, GB, Bd. 14, 15. März 1999 (1999-03-15), Seiten 247-256, XP000912020 ISSN: 0956-5663 * Zusammenfassung * * Abbildung 3 * ----- | 1-10 | RECHERCHIERTE SACHGEBIETE (Int.Cl.7) G01N B01L B81B G01L |

Der vorliegende Recherchenbericht wurde für alle Patentansprüche erstellt

| Recherchenort | Abschlußdatum der Recherche | Prüfer |
|---|---|---|
| MÜNCHEN | 28. Juni 2004 | Bravin, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
............................................................
& : Mitglied der gleichen Patentfamilie, übereinstimmendes Dokument

EPO FORM 1503 03.82 (P04C03)

**EP 1 489 404 A1**

## ANHANG ZUM EUROPÄISCHEN RECHERCHENBERICHT
## ÜBER DIE EUROPÄISCHE PATENTANMELDUNG NR.

EP 04 01 1167

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-06-2004

| Im Recherchenbericht angeführtes Patentdokument | | Datum der Veröffentlichung | Mitglied(er) der Patentfamilie | | Datum der Veröffentlichung |
|---|---|---|---|---|---|
| WO 0221115 | A | 14-03-2002 | DE | 10104957 A1 | 21-03-2002 |
| | | | WO | 0221115 A1 | 14-03-2002 |
| | | | EP | 1322947 A1 | 02-07-2003 |
| | | | JP | 2004508548 T | 18-03-2004 |
| | | | US | 2004038387 A1 | 26-02-2004 |
| WO 0055618 | A | 21-09-2000 | AU | 4099300 A | 04-10-2000 |
| | | | WO | 0055618 A2 | 21-09-2000 |
| | | | DE | 10080648 D2 | 28-02-2002 |

EPO FORM P0461

Für nähere Einzelheiten zu diesem Anhang : siehe Amtsblatt des Europäischen Patentamts, Nr.12/82

17